# EUROPÄISCHE PATENTSCHRIFT

(11) **EP 2 683 629 B1**
(45) Veröffentlichungstag und Bekanntmachung des Hinweises auf die Patenterteilung: **24.12.2014**
(21) Anmeldenummer: 12708824.3
(22) Anmeldetag: 08.03.2012
(51) Int. Cl.: B65G 1/04, B65G 1/06

(54) **ZIRKULARES ROAMING**
CIRCULAR ROAMING
ITINÉRANCE CIRCULAIRE

(30) Priorität: 11.03.2011 DE 102011014394
(43) Veröffentlichungstag der Anmeldung: 15.01.2014
(73) Patentinhaber: SSI Schäfer Peem GmbH, 8051 Graz (AT)
(72) Erfinder: WINKLER, Max, A-8010 Graz (AT)
(74) Vertreter: Witte, Weller & Partner Patentanwälte mbB
(86) Internationale Anmeldenummer: PCT/EP2012/054040
(87) Internationale Veröffentlichungsnummer: WO 2012/123335

(56) Entgegenhaltungen:
- WO-A2-02/062680
- DE-A1- 2 113 202
- GB-A- 1 333 745
- JP-A- 49 015 177
- US-A1- 2005 047 895

## Beschreibung

Die vorliegende Erfindung betrifft ein Verfahren zum Betreiben eines Regallagers mit Shuttle, die vorzugsweise als Einebenen-Fahrzeuge ausgebildet sind. Des Weiteren betrifft die vorliegende Erfindung ein Lager- und Kommissioniersystem mit einem Regallager, in welchem eine Vielzahl von Shuttle gleichzeitig in ein und derselben Regalgasse auf gleicher Höhe eingesetzt werden.

In der internationalen Patentanmeldung WO 2005/077788 A1 mit dem Titel "Verfahren und System zum Bedienen eines Regals in einer Kommissionieranlage" wird eine Regallageranordnung beschrieben, bei der mehrere Regalmodule übereinander angeordnet sind. Jedes Regalmodul umfasst mehrere Regalebenen. Jedes Regalmodul wird von einem herkömmlichen Regalbediengerät (nachfolgend auch "RBG" abgekürzt) bedient. Die RBG holen Lagereinheiten aus Lagerplätzen im Regal ab oder lagern Lagereinheiten in Lagerplätze im Regal ein. Die Lastaufnahmemittel der RBG werden horizontal und vertikal bewegt. Am Anfang und am Ende einer Regalgasse zwischen zwei Regalen sind stationäre RBG-Lifte vorgesehen, um die RBG in vertikaler Richtung zwischen übereinander angeordneten Regalmodulen umzusetzen. Durch die vertikale Umsetzbarkeit der RBG werden insgesamt weniger RBG benötigt, da nicht jedes Regalmodul permanent mit einem RBG bestückt sein muss. Die RBG werden bedarfsabhängig eingesetzt. Pro Regalmodul wird aber immer nur ein einziges RBG eingesetzt, um RBG-Kollisionen zu verhindern. Neben konventionellen RBG werden auch Shuttle mit Hubfunktion erwähnt, um zwei in vertikaler Richtung aneinandergrenzende Regalebenen innerhalb eines Regalmoduls mit einem Bediengerät (Shuttle) bedienen zu können.

Ein ähnlicher Ansatz wird in der deutschen Patentanmeldung DE 10 2009 032 406 A1 verfolgt. Dort werden ebenfalls Shuttle eingesetzt, die aber lediglich eine einzige Regalebene bedienen und dort als "Bahnfahrzeuge" bezeichnet werden. An einer ersten Stirnseite der Regalgassen wird jeweils ein stationärer Shuttle-Lift positioniert, um die beladenen Einebenen-Bediengeräte (Shuttle) in vertikaler Richtung an den Fuß des Shuttle-Lifts zu bewegen, wo die Shuttle ihre Ladung anschließend an eine angrenzende Lagereinheiten-Fördertechnik abgeben. Danach wird das Shuttle wieder in der vertikalen Richtung auf die Höhe seiner Regalebene zurücktransportiert, um in seinen zugeordneten Fahrkanal zurückzukehren. Auf der gegenüberliegenden, zweiten Stirnseite der Regalgassen ist ein konventionelles RBG vorgesehen, das entlang der zweiten Stirnseite des Regals horizontal und vertikal verfahrbar ist, um Shuttle zwischen benachbarten Regalgassen, und auch Regalebenen in unterschiedlichen Höhen, umzusetzen. Angeblich reicht es bei diesem Layout aus, dass - unabhängig von einer Regalhöhe - pro Regalgasse lediglich drei bis vier Shuttle vorgesehen sind, die auf jeweils unterschiedlichen Höhen bzw. in unterschiedlichen Regalebenen eingesetzt werden.

Ein Nachteil der oben beschriebenen Ansätze ist, dass pro Regalebene bzw. Regalmodul immer nur ein einziges Bediengerät kollisionsfrei eingesetzt werden kann. Da die Bediengeräte immer wieder innerhalb der Regalgasse vorwärts und rückwärts verfahren werden, kann nie mehr als ein Bediengerät gleichzeitig in der Gasse eingesetzt werden. Die Fahrwege der Bediengeräte hängen von den Einlagerungsorten und Auslagerungsorten ab, die ständig wechseln und an beliebigen Positionen innerhalb der Regalgasse angeordnet sind, so dass Vorwärts- und Rückwärtsfahrten erforderlich sind.

Außerdem sind die oben beschriebenen Ansätze nicht geeignet, Kommissionierarbeitsplätze mit Lagerbehältern (Lagereinheiten) zu versorgen, um Pick-Leistungen von mehr als 1000 Picks/Stunde zu gewährleisten, insbesondere nicht, wenn die Lagerbehälter nur aus wenigen Regalgassen, insbesondere nur einer einzigen Regalgasse, ausgelagert werden. In diesem Fall stellt der stirnseitig zur Regalgasse angeordnete Shuttle-Lift einen der wesentlichen leistungsbegrenzenden Faktoren dar, da über den Shuttle-Lift der Transport der Shuttle in der vertikalen Richtung in beiden Richtungen (auf und ab) erfolgt. Ein weiterer, leistungsbegrenzender Faktor kann ein vermehrter Zugriff auf eine spezielle (Bedien-)Ebene in der Gasse darstellen, weil das Shuttle nicht mehr nachkommt, die Ein- und Auslagerungen innerhalb einer zur Verfügung stehenden Zeit durchzuführen.

Gleiches gilt natürlich auch für solche Layouts, bei denen die Shuttle oder RBG die ein- und auszulagernden Lagereinheiten direkt an den stationären, stirnseitig angeordneten Lift abgeben.

Weitere Lager- und Kommissioniersystem sowie Konzepte zum Ein- und Auslagern von Stückgütern sind in den Dokumenten DE 42 42 811 A1, DE 21 63 116 A, DE 39 41 754 A1, DE 42 38 322 C2, JP 49 015177A und DE 21 13 202 A1 offenbart.

GB 1,333,745 beschreibt einen gattungsgemässen Lager- und Kommissioniersystem.

Es ist daher eine Aufgabe der vorliegenden Erfindung, ein verbessertes Ein- und Auslagerkonzept zu bieten, das insbesondere einen höheren Durchsatz (Anzahl von Ein- und Auslageroperationen pro Zeiteinheit) ermöglicht. Des Weiteren soll diese Lösung skalierbar sein, d.h. eine schrittweise Erweiterung von Speicherkapazität und/oder Durchsatz (Leistung) ermöglichen.

Diese Aufgabe wird durch ein Verfahren zum Betreiben eines Regallagers nach Anspruch 1 gelöst.

Ein Vorteil der vorliegenden Erfindung ist die Optimierung von Lager- und Transportkapazitäten sowie eine Reduzierung der (Investitions-)Kosten pro Lagerplatz im Verhältnis zur Leistung bzw. zum Durchsatz (Anzahl von Ein- und Auslageroperationen pro Zeiteinheit). Insbesondere bei den folgenden Anwendungsfällen ist der Durchsatz eine entscheidende Größe für die Gesamtleistung des Systems: Versorgung von Arbeitsplätzen für die Kommissionierung von (Kommissionier-)Aufträgen oder ähnliche Funktionen (Verdichtung, Retouren, etc.); und Puffern, wie z.B. das Regallager als Versandpuffer.

Ein weiterer Vorteil ist in der Skalierbarkeit zu sehen, d.h. das System der Erfindung kann schrittweise um Lagerplatzkapazität und/oder Leistung (Fahrzeuge) erweitert werden.

Ein zusätzlicher Vorteil ist darin zu sehen, dass mehrere Fahrzeuge in einer Ebene bzw. einem Kanal gleichzeitig betrieben werden können. Dies ist auch der Grund dafür, dass hohe Ein- und Auslagerleistungen auch dann erzielt werden können, wenn in einer begrenzten Zeit mehrere Ein- und Auslageraufträge in der gleichen Regalebene bzw. dem gleichen Kanal der Regalgasse durchzuführen sind.

Das Regallager, welches vorzugsweise mehrere, nebeneinander liegende parallele Regalgassen aufweist, kann sowohl stirnseitig (vor und/oder hinter der Öffnung der Regalgasse) als auch seitlich entlang der Längsseite (der äußeren Regale) materialflusstechnisch angebunden werden. Dies erhöht eine Layout-Flexibilität enorm.

Kollisionen werden aufgrund der Einbahnstrassenregelung vermieden, obwohl mehrere Fahrzeuge in dem gleichen Kanal fahren.

Ferner ist es bevorzugt, wenn die Fahrzeuge Lagereinheiten in die Lagerplätze einlagern und/oder aus den Lagerplätzen auslagern, während sie durch einen der Kanäle fahren, wobei leere Fahrzeuge an einem Befüllpunkt mit einzulagernden Lagereinheiten beladen werden und wobei beladene Fahrzeuge auszulagernde Lagereinheiten an einem Übergabepunkt abgeben, wobei der Befüllpunkt an einem Zuführförderer, vorzugsweise in der Nähe des ersten oder zweiten Lifts, koppelt, und wobei der Übergabepunkt an einen Abführförderer über einen Kommissionierplatz, vorzugsweise in der Nähe des anderen Lifts, koppelt.

Weiter ist es von Vorteil, wenn die festen Fahrrichtungen für alle Kanäle der mindestens einen Regalgasse in der gleichen Richtung festgelegt werden.

Üblicherweise wird das Regallager über eine bodengebundene Fördertechnik mit Lagereinheiten versorgt, so dass sich die unterste Regalebene bzw. der unterste Kanal anbietet, um die Fahrzeuge aus allen anderen Regalebenen zum Einlagerungslift zurückzuführen.

Außerdem können die Lifte so getaktet bewegt werden, dass pro Taktzyklus mindestens ein Fahrzeug in jeden der Lifte einfahren oder aus jedem der Lifte ausfahren kann.

Ferner wird die Aufgabe durch ein Lager- und Kommissioniersystem nach Anspruch 4 gelöst,

Ferner ist es bevorzugt, wenn zusätzlich ein Fahrweg außerhalb der mindestens einen Regalgasse vorhanden ist, der den ersten Lift mit dem zweiten Lift für die Fahrzeuge verbindet, wobei die Steuerung die Fahrzeuge veranlasst, den Fahrweg nur in einer festen Fahrrichtung zu durchfahren.

Auf diese Weise ist es möglich, eine in sich geschlossene Fahrwegschleife zu bilden, wenn in der Regalgasse alle Kanäle in der gleichen Fahrrichtung betrieben werden.

Weiter ist es bevorzugt, wenn die Steuerung die Fahrzeuge veranlasst, die Kanäle alle in der gleichen festen Fahrrichtung zu durchfahren.

Außerdem kann zumindest einer der Kanäle in einer Querrichtung an einen Umsetzer koppeln.

Da die Fahrzeuge üblicherweise nur geradeaus fahren können, d.h. ungelenkt sind, und es ggf. gewünscht ist, die Fahrzeuge auch in benachbarte, parallele Regalgassen zwecks Ein- und Auslagerungen umsetzen zu können, kann dieses Umsetzen auch bereits innerhalb des Regals selbst mittels der Umsetzer erfolgen. Die Fahrzeuge brauchen also nicht eine vollständige Fahrwegschleife zu durchlaufen, um zu einer anderen Regalebene oder einer anderen Regalgasse zu gelangen. Der Wechsel in der Regalgasse ist dann grundsätzlich möglich.

Bei einer weiteren vorteilhaften Ausgestaltung ist der Befüllpunkt angrenzend an den Lift angeordnet, der die Fahrzeuge nach oben transportiert.

Die einzulagernden Lagereinheiten legen so kurze Wege zurück, insbesondere innerhalb des Regallagers, so dass Einlagerungen schnell und effizient durchgeführt werden können.

Analoges gilt für Auslagerungen, wenn der Übergabepunkt an den Lift angrenzend angeordnet ist, der die Fahrzeuge nach unten transportiert.

Zusätzlich kann ein Fahrzeugpuffer vorgesehen sein.

Ein weiterer bedeutender Vorteil der Erfindung ist im bedarfsabhängigen Einsatz von beliebig vielen Fahrzeugen zu sehen. Wenn viele Ein- und Auslagerungsoperationen durchzuführen sind, werden mehr Fahrzeuge eingesetzt, als wenn wenige Ein- und Auslageroperationen durchzuführen sind. Der Anlagenbetreiber ist somit in der Lage, flexibel auf Auftragsspitzen zu reagieren, bei denen viele Ein- und/oder Auslageroperationen gleichzeitig durchzuführen sind.

Bei einer weiteren bevorzugten Ausführungsform weist das System ferner einen (Lagereinheiten-)Zuführförderer und einen (Lagereinheiten-)Abführförderer auf, die an den Befüllpunkt und/oder an den Übergabepunkt koppeln.

Über den Zuführförderer und den Abführförderer werden die Lagereinheiten vom und zum Regallager transportiert. Ein Transport außerhalb des Regallagers erfolgt vorzugsweise über konventionelle Förderer, wie z.B. Rollenförderer, Gurtförderer, Kettenförderer, Riemenförderer oder dergleichen, um die zusätzliche Funktionalität der Fahrzeuge (Abgeben und Aufnehmen mittels Lastaufnahmemittel) nicht über Maß zu strapazieren.

Ferner ist es von Vorteil, wenn pro Regalebene ein Kanal in der mindestens einen Regalgasse definiert ist.

In diesem Fall sind die Fahrzeuge als Einebenen-Bediengeräte ohne Hubfunktion ausgebildet, was den Fahrzeugpreis und somit die Gesamtinvestitionskosten senkt.

Insbesondere können die Fahrzeuge nur geradeaus fahren.

Aufwendige Lenkmechanismen können weggelassen werden. Diese Maßnahme reduziert Kosten zusätzlich.

Das System kann ferner einen Kommissionierplatz aufweisen, der materialflusstechnisch an den Übergabepunkt koppelt.

Insbesondere sind die Lifte als endlos umlaufende Vertikalförderer ausgebildet.

In diesem Fall gibt es keine Leerfahrten der Lifte, d.h. Bewegungen ohne Fahrzeug in einer Richtung, die entgegengesetzt zur Einbahnstraßen-Transportrichtung des jeweiligen Lifts orientiert ist.

Bei einer weiteren vorteilhaften Ausgestaltung weist das System eine weitere Regalgasse auf, in der mindestens ein horizontal und vertikal bewegliches Regalbediengerät vorgesehen ist, um Lagerplätze in der weiteren Regalgasse, die (Rücken an Rücken) an die mindestens eine Regalgasse angrenzen, mit Lagereinheiten zu versorgen.

Auf diese Weise kann der Nachschub alternativ über andere Bediengeräte als die Kanal-Fahrzeuge erfolgen, die im Wesentlichen zur Auslagerung eingesetzt werden können.

Insbesondere sind Durchlaufkanäle in der Querrichtung vorgesehen, die sich von der weiteren Regalgasse zur mindestens einen Regalgasse erstrecken.

Durchlaufkanäle haben den Vorteil, dass die bevorrateten Lagereinheiten automatisch in Richtung der mindestens einen Regalgasse nachgeführt werden, wo die (Kanal-)Fahrzeuge zwecks Ein- und Auslagerung in den Kanälen fahren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Darstellung eines Regallagers der Erfindung;
- Fig. 2: eine Seitenansicht eines Regallagers;
- Fig. 3: eine Draufsicht auf ein Lager- und Kommissioniersystem der Erfindung;
- Fig. 4: eine perspektivische Ansicht eines schematisch dargestellten, auslagernden Fahrzeug-Lifts an einer Stirnseite einer Regalgasse; und
- Fig. 5: ein Flussdiagramm eines Verfahrens zum Betreiben eines Regallagers gemäß der Erfindung.

Wenn im Nachfolgenden von vertikalen und horizontalen Orientierungen gesprochen wird, versteht es sich von selbst, dass die Orientierungen jederzeit durch eine Drehung miteinander vertauscht werden können und deshalb nicht einschränkend zu interpretieren sind.

Unter einem RBG wird nachfolgend ein Förderzeug bzw. Bediengerät verstanden, das üblicherweise in einer Regalgasse zwischen zwei parallelen Regalen, meist schienengeführt, verfahren wird. Typischerweise weist ein RBG ein Fahrwerk, einen oder mehrere Masten, ein Hubwerk sowie mindestens ein Lastaufnahmemittel auf. Der Mast kann an einer oberen Führungsschiene geführt und/oder am Boden mit einer Traverse verbunden sein, welche die Kräfte über Stütz- und Führungsrollen übertragen. Antriebe werden oft als Reibantriebe oder Zahnriemenantriebe ausgeführt. Ein Hubantrieb des RBG erfolgt häufig mittels umlaufender Zugmittel, wie z.B. Zahnriemen, Ketten oder Seilen. Die Lastaufnahme erfolgt z.B. bei Paletten über eine teleskopierbare Gabel und bei Behältern durch Umwälzen per Gurtförderer, Einziehen mit Zugrichtungen (z.B. Haken, Lasso oder Schwenkarm) oder mittels eines Hubtischs.

Unter einer Lagereinheit wird nachfolgend eine Handhabungseinheit verstanden, die insbesondere im Lagerbereich (Regal) eingesetzt wird. Eine Lagereinheit ist typischerweise artikelrein, kann aber auch gemischt sein. Die Lagereinheit kann ein Lagerhilfsmittel sowie das Lagergut selbst umfassen. Die Lagereinheit kann aber auch allein das Lagergut sein, wenn das Lagerhilfsmittel weggelassen wird. Als Lagerhilfsmittel werden üblicherweise Ladehilfsmittel eingesetzt, wie z.B. Paletten, Gitterboxen, Container, Behälter, Kartons, Tablare und Ähnliches. Lagergüter umfassen Stückgüter, Schüttgüter, Flüssigkeiten oder Gase. Schüttgüter, Flüssigkeiten und Gase benötigen zur weiteren Handhabung Packmittel, um Packstücke zu definieren. Im Nachfolgenden werden exemplarisch (Lager-)Behälter als Lagereinheiten betrachtet werden. Es versteht sich, dass alle Ausführungen im Zusammenhang mit Lagerbehältern analog auch auf andere Lagereinheiten, wie z.B. Kartons oder andere Verpackungseinheiten, anwendbar sind.

Eine Regalanordnung (z.B. ein Regallager) umfasst üblicherweise eine Vielzahl von parallel angeordneten Regalen, die in Form von Einzelregalen oder Doppelregalen vorgesehen sind. Doppelregale sind Einzelregale, die Rücken an Rücken aufgestellt sind. Zwischen den Regalen sind Regalgassen definiert, die üblicherweise in Längsrichtung der Regale verlaufen und als Aktionsraum für die Bediengeräte dienen. Die Regale enden an ihren, sich jeweils gegenüberliegenden Stirnseiten, die wiederum in einer Ebene senkrecht zur Längsrichtung der Regalgasse orientiert sind. Die Regale selbst weisen eine Vielzahl von (Regal-)Lagerplätzen bzw. Stellplätzen auf, die matrixförmig in übereinanderliegenden Regalebenen angeordnet sind. Die Teilung der Lagerplätze in horizontaler Richtung und die Teilung der Regalebenen in vertikaler Richtung sind üblicherweise symmetrisch für alle Regale. Abweichungen sind natürlich möglich. Lagerplätze in der vertikalen Richtung bilden eine Regalspalte. Regalspalten erstrecken sich generell in der vertikalen Richtung innerhalb des Regals. Regalebenen und -zeilen erstrecken sich generell in der horizontalen Richtung.

Nachfolgend wird unter einem Vertikallift oder Heber eine Lagereinheit-Handhabungsvorrichtung mit mindestens einem Lastaufnahmemittel verstanden, das ausschließlich in der vertikalen Richtung bewegt wird und somit allein zur Überwindung von Höhendifferenzen dient. Ein Vertikallift bzw. Heber ist, im Gegensatz zu einem Bediengerät, insbesondere einem RBG, relativ zu den Regalen und der Regalgasse stationär angeordnet.

Unter einem Fahrzeug bzw. Shuttle wird nachfolgend ein Regalbediengerät verstanden, das im Wesentlichen eine, vorzugsweise eine einzige, Regalebene bzw. -zeile bedient, um die Lagerplätze dieser Regalebene bzw. -zeile mit Lagereinheiten zu versorgen, d.h. die Lagereinheiten ein- und auszulagern.

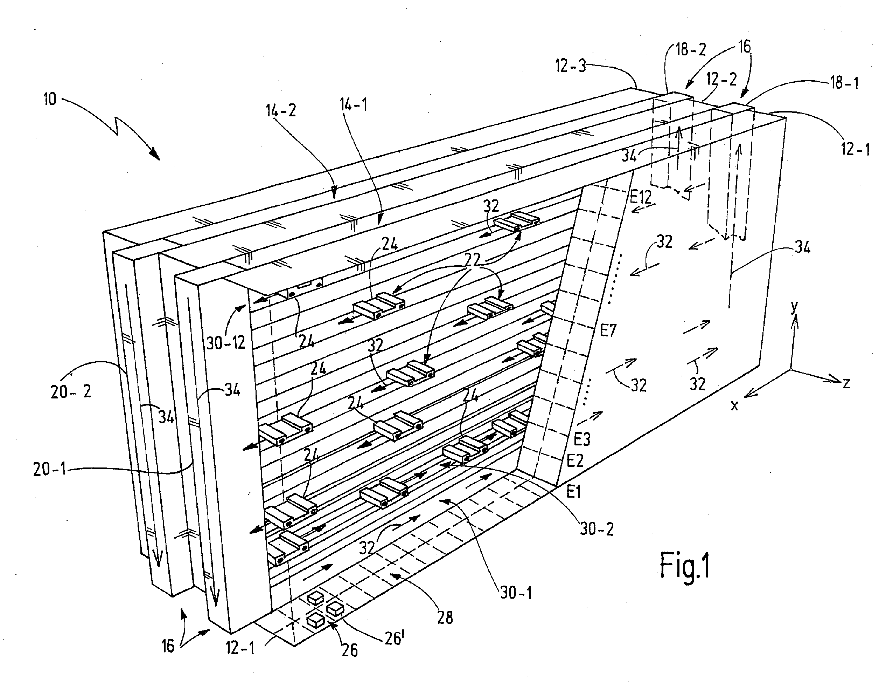

Fig. 1 zeigt ein Regallager 10 in perspektivischer Darstellung.

Das Regallager 10 weist mindestens zwei Regale 12 auf, die eine Regalgasse 14 zwischen sich definieren, die sich im Wesentlichen in der Längsrichtung X erstreckt. In der Fig. 1 sind exemplarisch drei Regale 12-1, 12-2 und 12-3 gezeigt. Zwischen den Regalen 12-1 und 12-2 erstreckt sich eine Regalgasse 14-1 in der Längsrichtung X. Zwischen den Regalen 12-2 und 12-3 erstreckt sich eine weitere, zweite Regalgasse 14-2 in der Längsrichtung X. Die Regalgassen 14-1 und 14-2 weisen vorzugsweise eine identische Breite in der Querrichtung Z und eine identische Höhe in der Vertikalen Y auf. Jedes Regal 12 weist eine Vielzahl von Regalebenen Eᵢ auf. In der Fig. 1 sind exemplarisch zwölf Regalebenen E1 bis E12 gezeigt, die vorzugsweise (vertikal) gleich beabstandet sind. Vorzugsweise wird die Regalteilung in der Längsrichtung X und Höhe Y symmetrisch für alle Regale 12 gewählt. Im Einzelfall kann davon abgewichen werden.

An den hier nicht näher bezeichneten Stirnseiten des Regallagers 10 bzw. der Regale 12 und Regalgassen 14, die sich im Wesentlichen in einer vertikalen YZ-Ebene senkrecht zur Längsrichtung X erstrecken, sind stationäre Heber- bzw. (Vertikal-)Lifte 16 für Fahrzeuge 22 angeordnet. Die Lifte 16 sind an beiden Stirnseiten angeordnet und stehen somit im Bereich des Anfangs und des Endes der Regalgassen 14-1 und 14-2. Es versteht sich, dass die Lifte 16 auch stirnseitig an die Regale 12-1, 12-2 und 12-3 angrenzen können.

Im Beispiel der Fig. 1 ist am Anfang jeder Regalgasse 14-1 bzw. 14-2 ein Aufwärtslift 18-1 bzw. 18-2 für Fahrzeuge 22 angeordnet, der nachfolgend auch "Einlagerlift" genannt werden. Am Ende der jeweiligen Regalgasse 14 ist jeweils ein Abwärtslift 20 für Fahrzeuge 22 angeordnet, der nachfolgend auch "Auslagerlift" genannt wird. In der Fig. 1 reichen die Lifte 16 in die Regalgassen 14 hinein. Es versteht sich, dass die Lifte 16 auch direkt angrenzend an oder leicht beabstandet zu den Regalgassen 14 angeordnet werden können, so dass sie außerhalb der Regalgassen 14 liegen. Eine leicht beabstandete Anordnung kann insbesondere für die Auslagerlifte 20 von Vorteil sein, um die Fahrzeuge 22 in unmittelbarer Nähe des Auslagerlifts 20 entladen zu können, wie es nachfolgend noch ausführlicher beschrieben werden wird.

Die Regalebenen Ei werden von den Fahrzeugen 22, die auch als "Shuttle 22" bezeichnet werden, bedient, die im Beispiel der Fig. 1 als Einebenen-Bediengeräte 24 ausgeführt sind, d.h. keinen Hub in Y-Richtung durchführen können, um mehrere vertikal übereinander angeordnete Regalebenen Ei bedienen zu können. Die Shuttle 22 versorgen die Regalebenen Ei mit Lagereinheiten 26, z.B. mit Lagerbehältern 26', die in Lagerplätze 28 eingelagert oder aus den Lagerplätzen 28 mittels den Fahrzeugen 22 ausgelagert werden. Die Fahrzeuge 22 weisen zu diesem Zweck ein Lastaufnahmemittel auf, mit dem die Lagerbehälter 26' einfach tief oder mehrfach tief gehandhabt werden können.

Die Fahrzeuge 22 bewegen sich innerhalb der Regalgassen 14 in Fahrzeugkanälen bzw. Kanälen 30. Da in der Fig. 1 jede Regalebene Ei mit einem Einebenen-Bediengerät 24 bedient wird, erstreckt sich jeder Kanal 30 in horizontaler Richtung entlang der Regalgasse 14 und in vertikaler Richtung entlang einer der Regalebenen Ei, und zwar über die Breite der Regalgasse in der Z-Richtung. Jeder Kanal 30 definiert also einen Raum, in welchem die Fahrzeuge 22 entlang der oder den Regalebenen Ei in der Längsrichtung X (und ggf. in der Vertikalen Y) bewegt werden können, um die Lagerbehälter 26' ein- und auszulagern.

Bei der vorliegenden Erfindung werden - im Gegensatz zum eingangs beschriebenen Stand der Technik - bevorzugte Fahrrichtungen fest definiert, entlang denen die Fahrzeuge 22 (ausschließlich) innerhalb des und ggf. entlang des Regallagers 10 bewegt werden. Es werden in diesem Sinne "Einbahnstraßen" definiert, so dass sich die Fahrzeuge 22 in jeweils nur einer Richtung bewegen dürfen.

Im Beispiel der Fig. 1 sind diese Einbahnstraßenrichtungen durch Pfeile 32 und 34 angedeutet. Die Pfeile 32 stellen die (Einbahnstraßen-)Fahrrichtungen in den Kanälen 30 dar. Die Pfeile 34 stellen die (Einbahnstraßen-)Transportrichtungen in den Liften 16 dar.

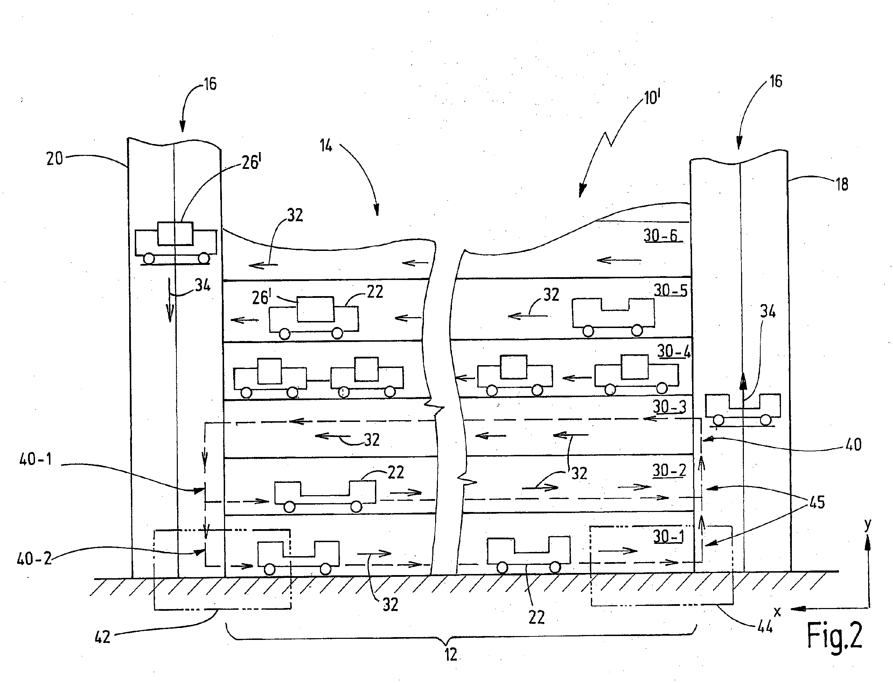

Wenn man eine Bewegung entlang der positiven X-Richtung als ein sich nach "vorne" Bewegen definiert, bewegen sich die Fahrzeuge 22 auf Höhe der beiden unteren Regalebenen E1 und E2 vom Auslagerlift 20-1 zum Einlagerlift 18-1 zurück. Der unterste Kanal in der Regalgasse 14-1 ist mit 30-1 bezeichnet. Ein direkt darüber angeordneter Kanal ist mit 30-2 bezeichnet. In den Kanälen 30-1 und 30-2 bewegen sich die Fahrzeuge 22 zurück zum Einlagerlift 18-1. Es versteht sich, dass alle Ausführungen analog für die zweite Regalgasse 14-2 oder weitere, hier nicht dargestellte Regalgassen 14 gelten können, die gemäß der Erfindung betrieben werden. Ferner versteht es sich, dass auch allein die erste Regalgasse 14-1 im Sinne der Erfindung betrieben werden kann und andere Regalgassen 14 auf konventionelle Art betrieben werden können. Die übrigen Kanäle 30, die ebenfalls aneinander grenzend oberhalb der beiden unteren Kanäle 30-1 und 30-2 angeordnet sind (Kanäle 30-3 bis 30-12) werden exemplarisch in einer entgegengesetzten Richtung betrieben, d.h. in diesen Kanälen 30 fahren die Fahrzeuge 22 ausschließlich nach vorn. Gleiches gilt für die Lifte 16. Der Einlagerlift 18-1 transportiert die Fahrzeuge 22 ausschließlich nach oben. Der Auslagerlift 20-1 transportiert die Fahrzeuge ausschließlich nach unten, so dass sich die Fahrzeuge 22 entlang in sich geschlossener Fahrwegschleifen 40 bewegen, von denen exemplarisch zwei Schleifen in der Fig. 2 dargestellt sind.

Bezug nehmend auf Fig. 2 ist eine Seitenansicht einer Regalgasse 14 in einem Regallager 10' gezeigt, an die sich rechts ein Einlagerlift 18 und links ein Auslagerlift 20 für die Fahrzeuge 22 direkt anschließt. Die Lifte 16 reichen hier nicht in die Regalgasse 14 hinein, sondern schließen direkt daran an.

Wie bei dem Regallager 10 der Fig. 1 können die beiden untersten Kanäle 30-1 und 30-2 zum Zurückführen der Fahrzeuge 22 zum Einlagerlift 18 benutzt werden. Die restlichen Kanäle 30 werden dann im Wesentlichen zum Auslagern von Lagerbehältern 26' benutzt. Die Fahrzeuge 22 bewegen sich entlang der in sich geschlossener Fahrwegschleifen 40, wobei eine Fahrwegschleife 40-1 exemplarisch gezeigt ist, die sich durch die Kanäle 30-2 und 30-3 sowie Teile der Lifte 16 erstreckt. Die Fahrzeuge 22 bewegen sich entlang der Fahrwegschleifen 40 nur in einer Richtung, d.h. nie in einer entgegengesetzten Richtung. Die Fahrzeuge 22 dürfen anhalten, um Lagerbehälter 26 aufzunehmen (Auslagerung) oder abzugeben (Einlagerung).

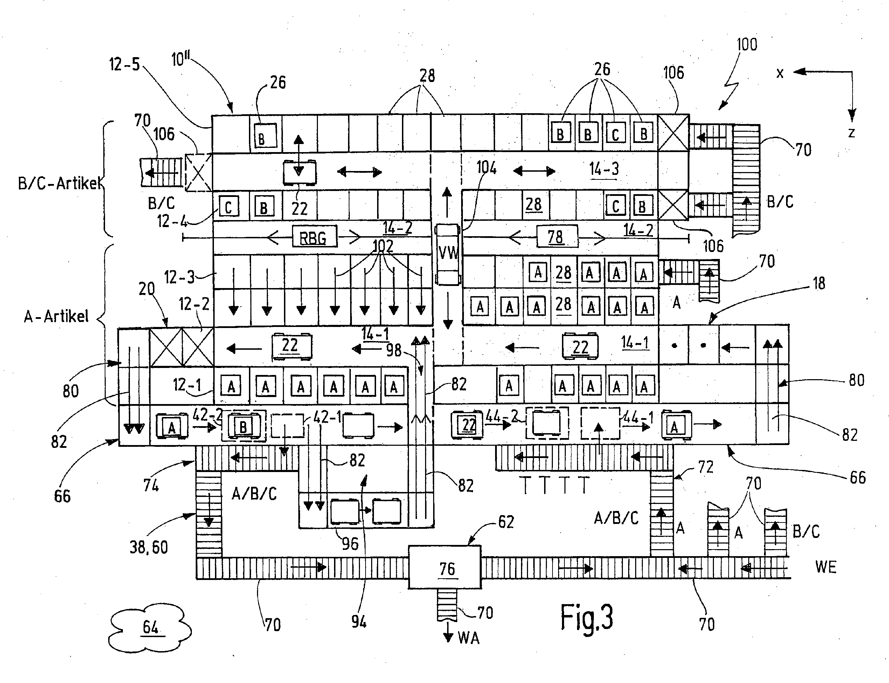

Im unteren Bereich der Lifte 16 sind durch strichpunktierte Linien ein Übergabepunkt 42 und ein Befüllpunkt 44 angedeutet. Am Übergabepunkt 42 geben die Fahrzeuge 22 Lagerbehälter 26' ab, die sie zuvor aus einer der Regalebenen Ei bei ihrer Fahrt entlang eines zugehörigen Kanals 30 ausgelagert haben. Am Befüllpunkt 44 können die Fahrzeuge 22 neue Lagerbehälter 26' aufnehmen, die sie in das Regal 12 einlagern, indem sie die einzulagernden Lagerbehälter 26' an Lagerplätze 28 abgeben. Eine Zuführung und Abführung der Lagerbehälter 26' wird nachfolgend unter Bezugnahme auf Fig. 3 noch genauer beschrieben werden. Es versteht sich, dass sich der Übergabepunkt 42 und der Befüllpunkt 44 jeweils über größere Bereiche erstrecken können und auch in unterschiedlichen Höhen befinden können. Außerdem kann an jedem der Punkte 42 und 44 sowohl eine Abgabe als auch eine Aufnahme erfolgen, so dass ggf. nur ein einziger der Punkte 42 und 44 benötigt wird. Die Aufnahme und Abgabe kann alternativ (oder auch ergänzend) zur aktiven Manipulation durch die Lastaufnahmemittel der Fahrzeuge 22 auch passiv erfolgen, indem z.B. Schieber von außen die Aufnahme und/oder Abgabe erledigen.

Im Nachfolgenden wird sowohl ein Einlagerungsvorgang als auch ein Auslagerungsvorgang beschrieben.

Beim Einlagerungsvorgang bestimmt ein übergeordneter, hier nicht dargestellter, Steuerungsrechner einen freien Lagerplatz 28 auf einer der Regalebenen Ei als Einlagerungsort für einen der Lagerbehälter 26'. Am Befüllpunkt 44, der sich in der Fig. 2 exemplarisch auf der Höhe der untersten Regalebene E1 befindet, wird einem freien, d.h. unbeladenen, Fahrzeug 22 der einzulagernde Lagerbehälter 26', vorzugsweise zeitlich abgestimmt, seitlich durch das Regal 12 angedient. Das Fahrzeug 22 übernimmt den einzulagernden Lagerbehälter 26' mit seinem Lastaufnahmemittel und fährt entlang der Fahrwegschleife 40-2 durch den Kanal 30-1 zum Einlagerlift 18. Die Lifte 16 werden üblicherweise getaktet betrieben, d.h. zwischen den jeweiligen Regalebenen Ei sind Lastaufnahmemittel der Lifte 16, die zur Aufnahme eines oder mehrerer Fahrzeuge 22 geeignet sind, kurzzeitig in Ruhe (Zyklusanfang), um ein Einfahren oder Ausfahren eines oder mehrerer Fahrzeuge 22 zu ermöglichen. Anschließend wird das Lastaufnahmemittel des Lifts 16 um eine oder mehrere Regalebenen Ei bewegt (Zyklusende). Vorzugsweise wird das Lastaufnahmemittel des Lifts 16 um die Höhe einer Regalebene Ei bewegt. Der Lift 16 kann als Paternoster ausgebildet sein und weist dann eine Vielzahl von Lastaufnahmemitteln auf, die vorzugsweise entsprechend der vertikalen Teilung der Regalebenen Ei zu einander beabstandet sind. Anstelle von Paternoster-Liften können aber auch herkömmliche Lifte eingesetzt werden, die nach einer Abgabe eines Fahrzeugs 22 an eine vorherbestimmte Regalebene Ei bzw. einen entsprechenden Kanal 30 wieder in eine ihrer Aufnahmepositionen 45, z.B. am Fuße der Regale 12, zurückkehren, von denen in der Fig. 2 zwei für den Einlagerlift 18 gezeigt sind. Dort können neue Fahrzeuge 22 für einen Transport nach oben aufgenommen werden. Sobald das Fahrzeug 22 mit dem einzulagernden Lagerbehälter 26' eine vorherbestimmte Regalebene Ej erreicht hat, fährt das Fahrzeug 22 in den entsprechenden Kanal 30-j ein. Das Fahrzeug 22 fährt so tief in den Kanal 30-j, bis es den vorherbestimmten Einlagerungsort (Lagerplatz 28) erreicht hat und gibt dann den einzulagernden Lagerbehälter 26' mit seinem Lastaufnahmemittel ab. Während der Abgabe des einzulagernden Lagerbehälters 26' steht das Fahrzeug 22 im Kanal 30-j. Die Fahrzeuge 22 können generell mit Sensoren versehen sein, die eine Abstandsbestimmung in der Längsrichtung X, d.h. längs zum jeweiligen Kanal 30, erlauben, um Kollisionen mit weiteren Fahrzeugen 22 zu unterbinden, die ggf. im gleichen Kanal 30-j betrieben werden. Wenn das Fahrzeug 22 seinen einzulagernden Lagerbehälter 26' abgegeben hat, kann es entweder direkt zum Befüllpunkt 44 zurückkehren oder einen auszulagernden Lagerbehälter 26' an einem stromabwärts gelegenen Auslagerungsort im Kanal 30-j aufnehmen. Danach fährt das Fahrzeug 22 den restlichen Weg durch den Kanal 30-j zum Auslagerlift 20, fährt dann in den Auslagerlift 20 ein und lässt sich im Kanal 30-1 absetzen. Dann wird der auszulagernde Lagerbehälter 26' am Übergabepunkt 42 abgegeben. Das Fahrzeug 22 kann erneut zum Einlagern und/oder Auslagern eingesetzt werden.

Wenn lediglich ein neuer Lagerbehälter 26' eingelagert werden soll, aber kein Lagerbehälter 26' aus dem Kanal 30-j ausgelagert werden soll, lässt sich das Fahrzeug 22 bis zu einem der untersten Kanäle 30-1 oder 30-2 fahren und fährt dann in den Kanal 30-1 (zwecks erneuter Einlagerung) oder 30-2 (zwecks Auslagerung ohne erneute Einlagerung) ein. Wenn das Fahrzeug 22 also nur einen Lagerbehälter 26' auslagern soll, kann es sich entweder auf die erste Regalebene E1 oder die zweite Regalebene E2 absenken lassen, fährt dann in den Kanal 30-1 ein und durchfährt den Kanal 30-1 ohne Aufnahme einer einzulagernder Lagereinheit 26, bis es wiederum den Einlagerlift 18 erreicht, um sich auf die Höhe einer Regalebene Ek bringen zu lassen, in der ein Auslagerungsort angeordnet ist.

Ein Auslagerungsvorgang verläuft analog, wobei ein auszulagernder Lagerbehälter 26' am Übergabepunkt 42 beispielsweise an eine Lagerbehälter-Fördertechnik, abgegeben wird. Danach steht das Fahrzeug 22 entweder für eine erneute Auslagerung oder eine Einlagerung zur Verfügung. Es versteht sich, dass das mehrere Übergabepunkte 42 oder Befüllpunkte 44 vorgesehen sein können, die sich vorzugsweise auf mehreren Niveaus von Regalebenen Ei befinden.

Wie im Straßenverkehr bewegen sich die Fahrzeuge 22 in bestimmten Bereichen im Regallager 10' immer nur in einer vorbestimmten festen Richtung. Deshalb ist es möglich, dass auch mehrere Fahrzeuge 22' gleichzeitig im gleichen Kanal 30 fahren, wie es exemplarisch im vierten Kanal 30-4 in Form von vier beladenen Fahrzeugen 22 gezeigt ist. Die Anzahl der Fahrzeuge 22, die sich gleichzeitig in einem Kanal 30 oder in der Regalgasse 14 aufhalten, kann bedarfsabhängig variiert werden, wie es nachfolgend und unter Bezugnahme auf Fig. 3 noch genauer beschrieben werden wird.

In Fig. 3 ist eine Draufsicht auf ein Lager- und Kommissioniersystem bzw. System 100 in einer Draufsicht gezeigt.

Das System 100 weist ein weiteres Regallager 10" auf, das nachfolgend noch genauer beschrieben werden wird. Ferner kann das System 100 eine Fördertechnik bzw. einen Förderer 60 für Lagereinheiten 26, eine oder mehrere Arbeitsstationen 62, einen Wareneingang WE, einen Warenausgang WA, eine (übergeordnete) Steuerung 64 und/oder mindestens einen Regal-externen Fahrweg 66 (bzw. Verbindungsweg 38) aufweisen.

Die Lagereinheiten-Fördertechnik 60 kann als Rollenförderer 70 oder in Form eines anderen Förderertyps (Kettenförderer, Riemenförderer, Bandförderer, Hängeförderer, etc.) implementiert sein. Die Lagereinheiten-Fördertechnik 60 verbindet verschiedene Komponenten des Systems 100 materialflusstechnisch und dient im Wesentlichen zur Versorgung dieser Komponenten mit Lagerbehältern 26'. Vom Wareneingang WE können einzulagernde Lagerbehälter 26' zu den verschiedenen Komponenten des Systems 10 gefördert werden. Über einen Zuführförderer 72 für Lagerbehälter 26' werden z.B. zwei Befüllpunkte 44-1 und 44-2 mit Lagerbehältern 26' versorgt. Über einen Abführförderer 74 werden auszulagernde Lagerbehälter 26' von z.B. zwei Übergabepunkten 42-1 und 42-2 zu einem Kommissionierplatz 76 gefördert, der eine mögliche Form einer Arbeitsstation 62 implementiert. Bei der Arbeitsstation 62 kann es sich auch um eine Packstation, Versandstation oder ähnliches handeln. Der Kommissionierplatz 76 kann wiederum über einen weiteren Rollenförderer 70 mit dem Warenausgang WA verbunden sein. Der Zuführförderer 72 und der Abführförderer 74 grenzen zumindest teilweise direkt an den Fahrweg 66 an. Alternativ können die Förderer 72 und 74 direkt an den Einlagerlift 18 bzw. den Auslagerlift 20 koppeln, insbesondere wenn kein externer Fahrweg 66 für die erste Regalgasse 14-1 vorgesehen ist.

Der Rollenförderer 70 kann den Wareneingang WE, der ferner Vereinzelungsstationen oder dergleichen aufweisen kann, auch an eine zweite Regalgasse 14-2, wo ein oder mehrere konventionelle RBG 78 betrieben werden, und/oder an eine dritte Regalgasse 14-3 koppeln. In Fig. 3 wird nur die erste Regalgasse 14-1 im Sinne der Erfindung betrieben.

Der optionale, externe Fahrweg 66, der in den Fig. 1 und 2 nicht benötigt wird, kommt konzeptionell immer dann zum Einsatz, wenn z.B. alle Kanäle 30 einer Regalgasse 14, die im Einbahnstraßen-Modus betrieben wird, alle in der gleichen Richtung betrieben werden, so dass es keinen Kanal 30 zur Zurückführung der Fahrzeuge 22 innerhalb der entsprechenden Regalgasse 14 gibt. In der Fig. 3 wird die Regalgasse 14-1 im Einbahnstraßen-Modus betrieben. Die Fahrzeuge 22 werden über den Einlagerlift 18, der hier exemplarisch zur gleichzeitigen Aufnahme von z.B. zwei Fahrzeugen 22 ausgelegt ist, auf ein Niveau einer gewünschten Regalebene Ei gehoben. Danach fahren die Fahrzeuge 22 durch den entsprechenden Kanal 30, lagern Lagerbehälter 26' ein und/oder aus und fahren dann zum Auslagerlift 20, der ebenfalls zur gleichzeitigen Aufnahme von z.B. zwei Fahrzeugen 22 ausgelegt ist und der an der gegenüberliegenden Stirnseite des Regallagers 10" positioniert ist. Sobald die Fahrzeuge 22 auf dem Niveau des externen Fahrwegs 60 angekommen sind, können sie den Auslagerlift 20 verlassen und außen um das Regallager 10" herum zwecks Abgabe und Aufnahme von Lagerbehältern 26' geleitet werden. Da die Fahrzeuge 22 in der Regel nur geradeaus fahren können, können Umsetzvorrichtungen 80, wie z.B. heb- und senkbare Riemenheber 82, eingesetzt werden, um die Fahrzeuge 22 in einer Querrichtung zu bewegen.

Der externe Fahrweg 66 verläuft parallel zum Regallager 10" und grenzt vorzugsweise an dieses an. Der externe Fahrweg 66 grenzt des Weiteren zumindest teilweise an den Abführförderer 74 sowie den Zuführförderer 72 an. Die Abführ- und Zuführförderer 72 und 74 können als eine Förderschleife ausgebildet sein, d.h. direkt aneinander koppeln.

Stromabwärts zum Abführförderer 74 kann ein (Fahrzeug-)Puffer 94 angeordnet sein. Selbstverständlich kann der Fahrzeugpuffer 94 auch stromaufwärts relativ zum Abführförderer angeordnet sein. Der Fahrzeugpuffer 94 kann ferner auch bei Ausführungsformen des Regallagers 18 ohne externen Fahrweg 60 eingesetzt werden. In diesem Fall kann der Puffer 94 z.B. an einen der Lifte 16 koppeln oder über eine Verbindung in Querrichtung Z durch das äußere Regal 12-1 hindurch an einen oder mehrere der Kanäle 30 koppeln. In der Fig. 3 umfasst der Puffer 94 einen weiteren Fahrweg 96, der parallel zum externen Fahrweg 66 verlaufen kann und der über weitere Umsetzer 80, z.B. Riemenheber 82, an den externen Fahrweg 66 koppelt. Im Beispiel der Fig. 3 koppelt der Ausgang des Puffers 94 zusätzlich über einen weiteren Riemenheber 82 direkt an die erste Regalgasse 14-1. Zu diesem Zweck ist im ersten Regal 12-1 ein in der Querrichtung Z verlaufender Tunnel 98 durch das Regal 12-1 vorgesehen, der anstatt eines oder mehrerer Regalplätze 28 vorgesehen ist. Die Ankopplung kann auf Höhe eines oder mehrerer beliebiger Kanäle 30 erfolgen.

Eine der Hauptfunktionen des Puffers 94 ist es, die Fahrzeuge 22 bedarfsabhängig für das Regallager 10" vorzuhalten. Wenn viele Fahrzeuge 22 im Regallager 10" benötigt werden, können zusätzliche Fahrzeuge 22 aus dem Puffer 94 in das System 100 eingeschleust werden. Werden weniger Fahrzeuge 22 benötigt, können solche Fahrzeuge 22, die im System 100 und insbesondere im Regallager 18" zu viel sind, in dem Puffer 94 zwischengespeichert werden. Es versteht sich, dass der in der Fig. 3 gezeigte Puffer 94, der hier lediglich zwei (Puffer-)Fahrzeuge 22 hält, in der Praxis üblicherweise zur Aufnahme von bedeutend mehr Fahrzeugen 22 ausgelegt ist.

Das Konzept der Erfindung lässt sich beliebig erweitern und zeichnet sich u.a. durch seine Kompatibilität aus. Exemplarisch können in der zweiten Regalgasse 14-2 ein oder mehrere herkömmliche RBG 78 zum Zwecke eines Einlagerns von Lagereinheiten 26 (Auffüllen) benutzt werden. Die RBG 78, die sich zwischen den Regalen 12-3 und 12-4 in der zweiten Regalgasse 14-2 horizontal und vertikal bewegen, können jeweils über zumindest ein Lastaufnahmemittel verfügen, das zur mehrfach tiefen Einlagerung der Lagereinheiten 26 geeignet ist. Alternativ oder ergänzend können die Regale 12-2 und 12-3 mit Durchlaufkanälen 102 ausgestattet sein, damit die Lagerbehälter 26' selbstständig von der Regalgasse 14-2 in Richtung der Regalgasse 14-1 nachgeführt werden, sobald eines der Fahrzeuge 22 einen der Lagerbehälter 26' in der Regalgasse 14-1 entnimmt bzw. aufnimmt.

Des Weiteren können die Fahrzeuge 22 von der ersten Regalgasse 14-1 auf Höhe einer oder mehrerer Regalebenen Ei in der Querrichtung Z in eine dritte Regalgasse 14-3 bewegt werden, z.B. mittels eines Verschiebewagens 104 oder einer weiteren Fördertechnik. Dabei ist es nicht erforderlich, dass die Fahrzeuge 22 mit einer Lenkung ausgestattet werden, weil die Fahrzeuge 22 in der Längsrichtung X auf den Verschiebewagen 104 auffahren, der Verschiebewagen in der Querrichtung Z verfährt und anschließend die Fahrzeuge 22 in der Längsrichtung X in eine andere Regalgasse 14-2 der 14-3 einfahren. Die dritte Regalgasse 14-3 kann ferner über Lagereinheiten-Lifte 106 an die Lagereinheiten-Fördertechnik 60 angeschlossen sein. Die Lifte 106 können an beiden Stirnseiten der dritten Regalgasse 14-3 vorgesehen sein.

Diese Art der Anbindung des Regallagers 10" an die Lagereinheiten-Fördertechnik 60 ist besonders dann sinnvoll, wenn die Regale 12 in Abhängigkeit von einer Zugriffshäufigkeit auf bevorratete Artikel oder Produkte (d.h. das Lagergut) bestückt werden. In der Fig. 3 werden die drei Regale 12-1 bis 12-3 mit sogenannten A-Artikeln bestückt. Dies ist durch den Buchstaben "A" in den Lagereinheiten 26 angedeutet. A-Artikel werden besonders häufig benötigt, z.B. zum Kommissionieren am Kommissionierplatz 76. In den Regalen 12-4 und 12-5 können B- und C-Artikel gelagert werden, die eine mittlere bzw. geringe Zugriffshäufigkeit (ABC-Verteilung) aufweisen. Der Materialfluss der A-, B- und C-Artikel ist im Bereich der Lagereinheiten-Fördertechnik 60 seitlich durch die Buchstaben "A", "B" und "C" angedeutet. Über den ersten Fördertechnikstich, der vom Wareneingang WE kommt, können z.B. B- und C-Artikel zu den Liften 106 der dritten Regalgasse 14-3 zum Zwecke einer Einlagerung transportiert werden. Über den zweiten Fördertechnikstich (relativ zum Wareneingang WE) können A-Artikel an die zweite Regalgasse 14-2 zum Zwecke einer Einlagerung geliefert werden. A-, B- und C-Artikel können über den dritten Fördertechnikstich relativ zum Wareneingang WE (Zuführförderer 72) zum Zwecke einer Befüllung der Fahrzeuge 22 an den Befüllpunkten 44 transportiert werden.

Auslagerungen aus der zweiten und dritten Regalgasse 14-2 und 14-3 können analog über die Fördertechnik erfolgen, z.B. an der gegenüberliegenden Stirnseite der jeweiligen Regalgasse 14.

Lagerbehälter 26', die am Kommissionierplatz 76 nicht vollständig geleert wurden, können über die drei Fördertechnikstiche, die in der Nähe des Wareneingangs WE liegen, in das Regallager 10" zurückgelagert werden.

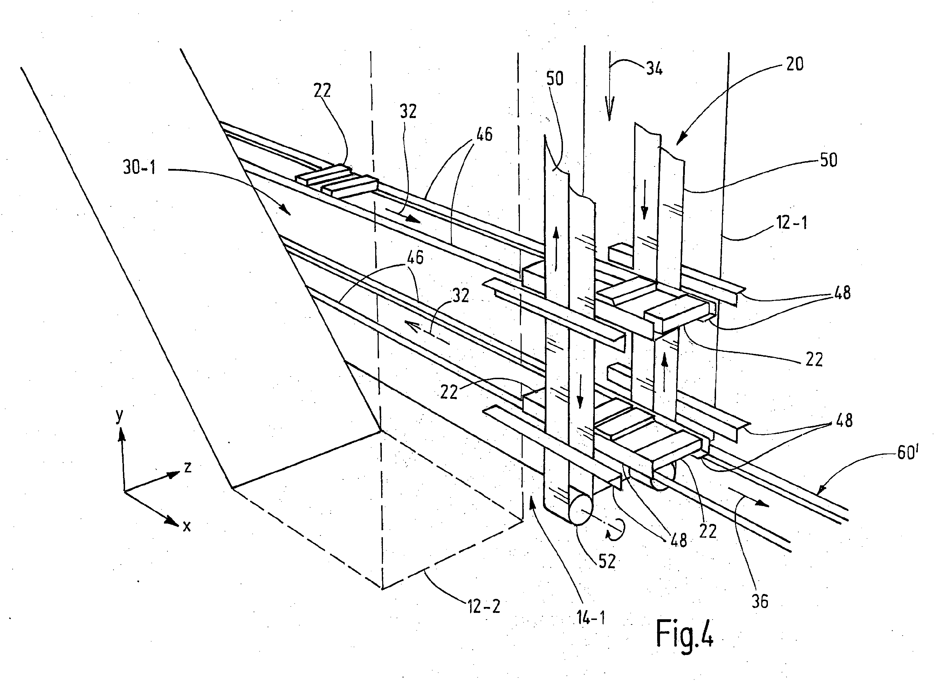

Bezug nehmend auf Fig. 4 ist eine perspektivische Ansicht eines Auslagerlifts 20 gezeigt, der nach dem Paternoster-Prinzip betrieben wird. Der Auslagerlift 20 steht an einem Ende der Regalgasse 14-1 und transportiert Fahrzeuge 22 in der Transportrichtung 34 nach unten zu einem externen Fahrweg 60'.

Die Fahrzeuge 22 können beidseitig der Regale 12-1 und 12-2 entlang von horizontalen Fahrschienen 46 am Regal 12 verfahren werden. Die Fahrschienen 46 sind auf den Niveaus der Regalebenen Ei angeordnet. Die Teilung der Fahrschienen 46 in der vertikalen Richtung Y entspricht einer Teilung (Abstand) von Aufnahmeelementen 48 (z.B. L-förmigen Profilschienen), die an einem Zugmittel 50 des Auslagerlifts 20 angebracht sind. Die Zugmittel 50 drehen endlos um Umlenkrollen 52 am Kopf und Fuß des Auslagerlifts 20.

Die horizontalen Abstände zwischen den Aufnahmeelementen 48, den Fahrschienen 46 und dem weiteren externen Fahrweg 60' in der Längsrichtung X sind so gewählt, dass die Fahrzeuge 22 nicht abstürzen, hängen bleiben oder herausfallen können.

Der Auslagerungslift 20 wird vorzugsweise getaktet bewegt, wobei pro Zyklus maximal so viele Fahrzeuge 22 gleichzeitig aufgenommen oder abgegeben werden können, wie die Aufnahmeelemente 48 fassen können. In der Fig. 4 können L-förmige Winkel jeweils zwei Fahrzeuge 22 gleichzeitig transportieren.

Alternativ zum externen Fahrweg 60' können die Fahrzeuge 22 natürlich auch in die Regalgasse 14-1 zurückkehren, wie es exemplarisch für den untersten Kanal 30-1 in Fig. 4 durch einen gepunkteten Pfeil 32 angedeutet ist.

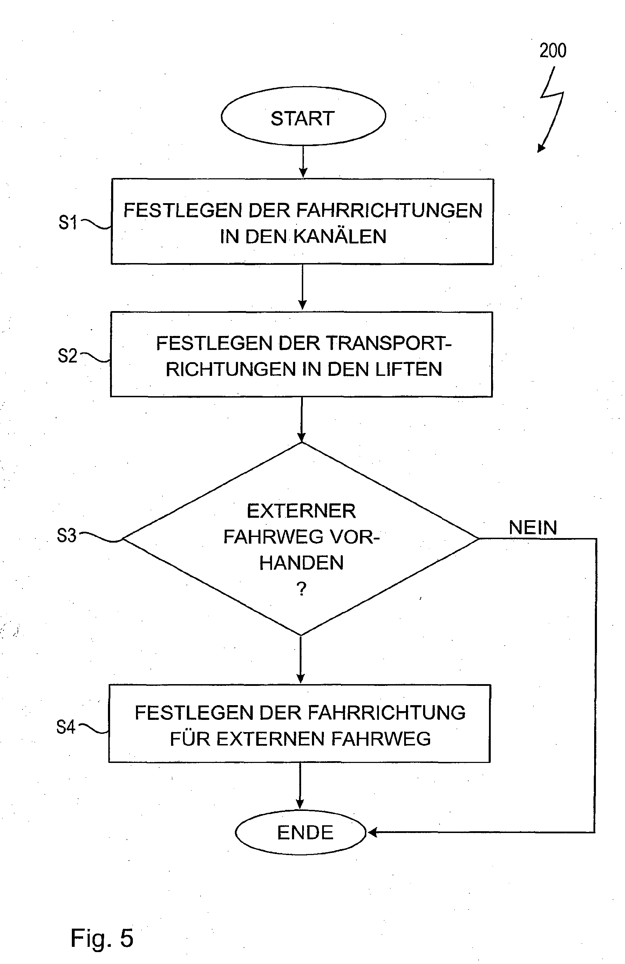

Bezug nehmend auf Fig. 5 ist ein Verfahren 200 zum Betreiben eines Regallagers 10 der zuvor beschriebenen Art gezeigt.

In einem ersten Schritt S1 werden die festen (Einbahnstraßen-)Fahrrichtungen 32 für die Fahrzeuge 22 in den Kanälen 30 in der Regalgasse 14-1 festgelegt. Die Fahrzeuge 22 dürfen sich dann nur in dieser Fahrrichtung 32 entweder vom ersten Lift 18-1 zum zweiten Lift 20-1 (vergleiche Fig. 1) bewegen, oder umgekehrt.

In einem zweiten Schritt S2 werden die Transportrichtungen 34 für jeden der Lifte 18 und 20 festgelegt. Die Lifte 18 und 20 transportieren die Fahrzeuge 22 dann entweder ausschließlich nach oben oder ausschließlich nach unten.

In einem Schritt S3 kann abgefragt werden, ob ein externer Fahrweg 60 bzw. ein externer Verbindungsweg 38 außerhalb des Regallagers 10 vorhanden ist. Wenn ein externer Fahrweg 60 vorhanden ist, wird die Fahrrichtung 36 für diesen externen Fahrweg 60 derart festgelegt, dass die Fahrzeuge 22 ausschließlich vom Auslagerungslift 20 zum Einlagerungslift 18 fahren dürfen. Wenn kein externer Fahrweg 60 vorhanden ist, endet das Verfahren 200 sofort. Die Fahr- und Transportrichtungen 32, 34 und 36 werden allerdings so festgelegt, dass die Fahrzeuge 22 entlang in sich geschlossener Fahrwegschleifen 40 durch die mindestens eine Regalgasse 14-1 fahren. Somit können mehrere Fahrzeuge 22 gleichzeitig kollisionsfrei durch jeden der Kanäle 30 fahren, die wiederum jeweils Teil einer in sich geschlossenen Fahrwegschleife 40 durch die mindestens eine Regalgasse 14-1 sind.

In der obenstehenden Beschreibung der Figuren hat man sich bei der Wahl der Orientierung der Koordinatensysteme generell an die in der Lagerlogistik übliche Bezeichnung gehalten, so dass die Längsrichtung eines Regals mit X, die Tiefe des Regals (bzw. die Querrichtung eines RBG) mit Z und die (vertikale) Höhe des Regals mit Y bezeichnet wurde.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit demselben Bezugszeichen übertragbar. Lage- und Orientierungsangaben (z.B. "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

## Patentansprüche

1. Verfahren zum Betreiben eines Regallagers (10), das eine Vielzahl von Regalen (12-1, 12-2) aufweist, die in Längsrichtung (X) mindestens eine Regalgasse (14-1) zwischen sich definieren, wobei jedes Regal (12) eine Vielzahl von übereinander angeordneten Regalebenen (Ei) aufweist, wobei am Anfang der mindestens einen Regalgasse (14-1) ein erster Fahrzeug-Lift (16; 18-1) und am Ende der mindestens einen Regalgasse (14-1) ein zweiter Fahrzeug-Lift (16; 20-1) angeordnet ist, die mit ihren Lastaufnahmemitteln jeweils mindestens ein Fahrzeug (22), das zum Ein- und Auslagern von Lagereinheiten (26) in und aus Lagerplätzen (28) in den Regalebenen (Ei) eingerichtet ist, auf eine gewünschte Höhe einer der Regalebenen (Ei) heben oder senken, wobei die mindestens eine Regalgasse (14-1) durch eine Vielzahl von übereinander angeordneten Fahrzeug-Kanälen (30) definiert ist, wobei sich jeder Fahrzeug-Kanal (30) entlang mindestens einer der Regalebenen (Ei) durch die mindestens eine Regalgasse (14-1) erstreckt, mit den folgenden Schritten:
für jeden Fahrzeug-Kanal (30) Festlegen (S1) einer festen Fahrrichtung (32) für die Fahrzeuge (22), so dass die Fahrzeuge (22) ausschließlich entweder vom ersten Lift (18-1) zum zweiten Lift (20-1), oder umgekehrt, durch einen jeweiligen Kanal (30) der mindestens einen Regalgasse (14-1) fahren;
und wenn ein Verbindungsweg (38) für die Fahrzeuge (22) außerhalb der mindestens einen Regalgasse (14-1) zwischen dem ersten Lift (18-1) und dem zweiten Lift (20-1) vorhanden ist, Festlegen (S4) einer festen Fahrrichtung (36) für den Verbindungsweg (38), so dass die Fahrzeuge (22) ausschließlich zwischen dem ersten Lift (18-1) und dem zweiten Lift (20-1), oder umgekehrt, fahren;
wobei die Transport- und Fahrrichtungen (32, 34, 36) so festgelegt werden, dass die Fahrzeuge (22) entlang in sich geschlossener Fahrwegschleifen (40) durch die mindestens eine Regalgasse (14-1) fahren, **gekennzeichnet durch** die Schritte:
Festlegen (S2) einer festen Transportrichtung (34) für jeden Lift (16; 18-1, 20-1), so dass der erste oder der zweite Fahrzeug-Lift (18-1, 20-1) die Fahrzeuge (22) ausschließlich nach oben und der andere Fahrzeug-Lift (20-1, 18-1) die Fahrzeuge (22) ausschließlich nach unten transportiert; und
wobei die feste Fahrrichtung (32) zumindest eines Kanals (30-1; 30-2) umgekehrt zu den festen Fahrrichtungen (32) der restlichen Kanäle (30) in der mindestens einen Regalgasse (14-1) festgelegt wird.

2. Verfahren nach Anspruch 1, wobei die Fahrzeuge (22) Lagereinheiten (26) in die Lagerplätze (28) einlagern und/oder aus den Lagerplätzen (28) auslagern, während sie durch einen der Kanäle (30) fahren, wobei leere Fahrzeuge (22) an einem Befüllpunkt (44) mit einzulagernden Lagereinheiten (26) beladen werden und wobei beladene Fahrzeuge (22) auszulagernde Lagereinheiten (26) an einem Übergabepunkt (42) abgeben, wobei der Befüllpunkt (44) an einen Zuführförderer (72), vorzugsweise in der Nähe des ersten oder zweiten Lifts (16), koppelt und wobei der Übergabepunkt (42) an einen Abführförderer (74) oder einen Kommissionierplatz (76), vorzugsweise in der Nähe des anderen Lifts (16), koppelt.

3. Verfahren nach einem der Ansprüche 1 oder 2, wobei die Lifte (16) so getaktet bewegt werden, dass pro Taktzyklus mindestens ein Fahrzeug (22) auf jeden der Lifte (16) auffahren oder aus jedem der Lifte (16) ausfahren kann.

4. Lager- und Kommissioniersystem (100) mit einem Regallager, das eine Vielzahl von Regalen (12-1, 12-2) aufweist, die in Längsrichtung (X) mindestens eine Regalgasse (14-1) zwischen sich definieren, wobei jedes Regal (12) eine Vielzahl von übereinander angeordneten Regalebenen (Ei) aufweist, wobei am Anfang der mindestens einen Regalgasse (14-1) ein erster Fahrzeug-Lift (16; 18-1) und am Ende der mindestens einen Regalgasse (14-1) ein zweiter Fahrzeug-Lift (16; 20-1) angeordnet ist, die mit ihren Lastaufnahmemitteln jeweils mindestens ein Fahrzeug (22), das zum Ein- und Auslagern von Lagereinheiten (26) in und aus Lagerplätzen (28) in den Regalebenen (Ei) eingerichtet ist, auf eine gewünschte Höhe einer der Regalebenen (Ei) heben oder senken, wobei die mindestens eine Regalgasse (14-1) durch eine Vielzahl von übereinander angeordneten Fahrzeug-Kanälen (30) definiert ist, wobei sich jeder Fahrzeug-Kanal (30) horizontal entlang mindestens einer der Regalebenen (Ei) durch die mindestens eine Regalgasse (14-1) erstreckt, wobei ferner eine Steuerung (64) vorgesehen ist, die die Fahrzeuge (22) veranlasst, in den Kanälen (30) der mindestens einen Regalgasse (14-1) ausschließlich in einer festen Fahrrichtung (32) zu fahren, so dass jedes der Fahrzeuge (22) entlang einer in sich geschlossenen Fahrwegschleife (40) fährt, **dadurch gekennzeichnet, daß** die Steuerung einen der Lifte (18-1) der mindestens einen Regalgasse (14-1) veranlasst, die Fahrzeuge (22) ausschließlich nach oben zu transportieren, und den anderen Lift (20-1) der mindestens einen Regalgasse (14-1) veranlasst, die Fahrzeuge (22) ausschließlich nach unten zu transportieren, wobei die feste Fahrrichtung (32) zumindest eines Kanals (30-1; 30-2) umgekehrt zu den festen Fahrrichtungen (32) der restlichen Kanäle (30) in der mindestens einen Regalgasse (14-1) festgelegt ist.

5. System nach Anspruch 4, das ferner einen Verbindungsweg (38; 60) außerhalb der mindestens einen Regalgasse (14-1) aufweist, der den ersten Lift (18-1, 20-1) mit dem zweiten Lift für die Fahrzeuge (22) verbindet, wobei die Steuerung (64) die Fahrzeuge (22) veranlasst, den Verbindungsweg (38; 60) nur in einer festen Fahrrichtung (36) zu durchfahren.

6. System nach Anspruch 5, wobei die Steuerung (64) die Fahrzeuge (22) veranlasst, die Kanäle (30) alle in der gleichen festen Fahrrichtung (32) zu durchfahren.

7. System nach einem der Ansprüche 4 bis 6, wobei zumindest einer der Kanäle (30) in einer Querrichtung (Z) an einen Umsetzer (80) koppelt.

8. System nach einem der Ansprüche 4 bis 7, wobei ein Befüllpunkt (44) angrenzend an den Lift (16; 18-1) angeordnet ist, der die Fahrzeuge (22) nach oben transportiert, oder entlang des Verbindungswegs (38) angeordnet ist.

9. System nach einem der Ansprüche 4 bis 8, wobei ein Übergabepunkt (42) angrenzend an den Lift (20-1) angeordnet ist, der die Fahrzeuge (22) nach unten transportiert.

10. System nach einem der Ansprüche 8 bis 9, das ferner einen Lagereinheiten-Zuführförderer (72) und einen Lagereinheiten-Abführförderer (74) aufweist, die materialflusstechnisch an den Befüllpunkt (44) und/oder an den Übergabepunkt (42) koppeln.

11. System nach einem der Ansprüche 4 bis 10, das ferner einen Fahrzeugpuffer (94) aufweist.

12. System nach einem der Ansprüche 4 bis 11, wobei pro Regalebene (Ei) ein Kanal (30) in der mindestens einen Regalgasse (14-1) vorgesehen ist.

13. System nach einem der Ansprüche 4 bis 12, wobei die Fahrzeuge (22) eingerichtet sind, nur geradeaus zu fahren.

14. System nach einem der Ansprüche 4 bis 13, das ferner einen Kommissionierplatz (76) aufweist, der materialflusstechnisch an den Übergabepunkt (42) koppelt.

15. System nach einem der Ansprüche 4 bis 14, wobei die Lifte (16; 18) als stationäre, endlos umlaufende Vertikalförderer ausgebildet sind.

16. System nach einem der Ansprüche 4 bis 15, das eine weitere Regalgasse (14' aufweist, in der mindestens ein Regalbediengerät (78) vorgesehen ist, um Lagerplätze (28), die an die mindestens eine Regalgasse (14-1) grenzen, mit Lagereinheiten (26) zu versorgen.

17. System nach Anspruch 16, wobei in den Regalen (12) Durchlaufkanäle (102) in Querrichtung (Z) vorgesehen sind, die sich von der weiteren Regalgasse (14-2) zur mindestens einen Regalgasse (14-1) erstrecken.

## Claims

1. Method for operating a rack warehouse (10) comprising a plurality of racks (12-1, 12-2), which define at least one rack aisle (14-1) therebetween in a longitudinal direction (X), wherein each rack (12) comprises a plurality of rack planes (Ei) arranged on top of each other, wherein at the start of the at least one rack aisle (14-1) a first vehicle elevator (16; 18-1) and at the end of the at least one rack aisle (14-1) a second vehicle elevator (16; 20-1) are arranged, which lift or lower, by means of the load-handling devices, respectively a vehicle (22), which is configured for storing and retrieving storage units (26) in and from storage locations (28) in the rack planes (Ei), to a desired height of one of the rack planes (Ei), wherein the at least one rack aisle (14-1) is defined by a plurality of vehicle channels (30) being arranged on top of each other, wherein each vehicle channel (30) extends along at least one of the rack planes (Ei) along the at least one rack aisle (14-1), comprising the steps of:
determining (S1) for each vehicle channel (30) a fixed travelling direction (32) for the vehicles (22) such that the vehicles (22) exclusively travel either from the first elevator (18-1) to the second elevator (20-1), or vice versa, through a respective channel (30) of the at least one rack aisle (14-1);
and if a connecting path (38) for the vehicles (22) exists outside the at least one rack aisle (14-1) between the first elevator (18-1) and the second elevator (20-1), determining (S4) a fixed travelling direction (36) for the connecting path (38) such that the vehicles (22) exclusively travel between the first elevator (18-1) and the second elevator (20-1), or vice versa;
wherein the transporting and travelling directions (32, 34, 36) are determined such that the vehicles (22) travel through the at least one rack aisle (14-1) along closed travelling-path loops (40), **characterized by** the steps:
determining (S2) a fixed transporting direction (34) for each lift (16; 18-1, 20-1) such that the first or second vehicle elevator (18-1, 20-1) transports the vehicles (22) exclusively upwards and the other vehicle elevator (20-1, 18-1) transports the vehicles (22) exclusively downwards; and
wherein the fixed travelling direction (32) of at least one channel (30-1; 30-2) is determined in an inverted direction relative to the fixed travelling directions (32) of the remaining channels (30) in the at least one rack aisle (14-1).

2. The method of claim 1, wherein the vehicles (22) store storage units (26) into the storage locations (28) and/or retrieve the same from the storage locations (28) while travelling through one of the channels (30), wherein empty vehicles (22) are loaded with storage units (26), which are to be stored, at a filling point (44) and wherein loaded vehicles (22) deliver storage units (26), which are to be retrieved, at a handing-over point (42), wherein the filling point (44) couples to a feeding conveyor (42), preferably close to the first or second elevator (16), and wherein the handing-over point (42) couples to a discharge conveyor (74), or an order-picking station (76), preferably close to the other elevator (16).

3. The method of one of claims 1 or 2, wherein the elevators (16) are moving in a clocked manner such that, for each clock cycle, at least one vehicle (22) can travel onto each of the elevators (16) or can travellingly leave each of the elevators (16).

4. A storage and order-picking system (100) having a rack warehouse, which comprises a plurality of racks (12-1, 12-2) defining in the longitudinal direction (X) at least one rack aisle (14-1) therebetween, wherein each rack (12) comprises a plurality of rack planes (Ei) being arranged on top of each other, wherein at the start of the at least one rack aisle (14-2) a first vehicle elevator (16; 18-1) and at the end of the at least one rack aisle (14-2) a second vehicle elevator (16; 20-2) are arranged, which lift or lower by means of the load-handling devices respectively at least one vehicle (22) being configured for storing and retrieving storage units (26) in and from storage locations (28) in the rack planes (Ei) to a desired height of one of the rack planes (Ei), wherein the at least one rack aisle (14-1) is defined by a plurality of vehicle channels (30) being arranged on top of each other, wherein each vehicle channel (30) extends horizontally along at least one of the rack planes (Ei) through the at least one rack aisle (14-1), wherein a controlling device (64) is additionally provided which causes the vehicles (22) to travel in the channels (30) of the at least one rack aisle (14-1) exclusively in a fixed travelling direction (32) such that each of the vehicles (22) travels along a closed travelling-path loop (40), **characterized in that** the controlling device causes one of the elevators (18-1) of the at least one rack aisle (14-1) to transport the vehicles (22) exclusively upwards and causes the other elevator (20-2) of the at least one rack aisle (14-1) to transport the vehicles (22) exclusively downwards, wherein the fixed travelling direction (32) of at least one channel (30-1; 30-2) is determined in an inverted direction relative to the fixed travelling directions (32) of the remaining channels (30) in the at least one rack aisle (14-1).

5. The system of claim 4, further comprising a connecting path (38; 60) outside the at least one rack aisle (14-1) connecting the first elevator (18-1, 20-1) to the second elevator for the vehicles (22), wherein the controlling device (64) causes the vehicles (22) to travel along the connecting path (38, 60) only in a fixed travelling direction (36).

6. The system of claim 5, wherein the controlling device (64) causes each of the vehicles (22) to travel through the channels (30) in the same fixed travelling direction (32).

7. The system of one of the claims 4 to 6, wherein at least one of the channels (30) couples to a transferring device (80) in a transversal direction (Z).

8. The system of one of the claims 4 to 7, wherein a filling point (44) is arranged adjacent to the elevator (16; 18-1) which transports the vehicles (22) upwards, or is arranged along the connecting path (38).

9. The system of one of the claims 4 to 8, wherein a handing-over point (42) is arranged adjacent to the elevator (20-1) transporting the vehicles (22) downwards.

10. The system of one of the claims 8 to 9, further comprising a storage-unit feeding conveyor (72) and a storage-unit discharging conveyor (74) which are coupled in terms of material flow to the filling point (44) and/or to the handing-over point (42).

11. The system of one of the claims 4 to 10, further comprising a vehicle buffer (94).

12. The system of one of the claims 4 to 11, wherein one channel (30) is provided in the at least one rack aisle (14-1) for each rack plane (Ei).

13. The system of one of the claims 4 to 12, wherein the vehicles (22) are configured to travel in a straight direction only.

14. The system of one of the claims 4 to 13, further comprising an order-picking station (76) which is coupled in terms of material flow to the handing-over point (42).

15. The system of one of the claims 4 to 14, wherein the elevators (16; 18) are formed as stationary vertical conveyors rotating in an endless manner.

16. The system of one of the claims 4 to 15, comprising an additional rack aisle (14') in which at least one storage and retrieval device (78) is provided for supplying storage locations (28), which are arranged adjacent to the at least one rack aisle (14-1), with storage units (26).

17. The system of claim 16, wherein flow channels (102) are provided in a transversal direction (Z) in the racks (12), the flow channels (102) extending from the additional rack aisle (14-2) towards the at least one rack aisle (14-1).

## Revendications

1. Procédé d'exploitation d'un entrepôt à rayonnages (10), lequel possède une pluralité de rayonnages (12-1, 12-2) qui définissent entre eux dans le sens longitudinal (X) au moins une travée de rayonnage (14-1), chaque rayonnage (12) possédant une pluralité de plans de rayonnage (Ei) disposés les uns au-dessus des autres, un premier élévateur de véhicule (16 ; 18-1) étant disposé au début de l'au moins une travée de rayonnage (14-1) et un deuxième élévateur de véhicule (16 ; 20-1) à la fin de l'au moins une travée de rayonnage (14-1), lesquels soulèvent ou abaissent à une hauteur souhaitée de l'un des plans de rayonnage (Ei), à l'aide de leurs moyens de suspension de charge, respectivement au moins un véhicule (22) qui est conçu pour l'emmagasinage et le prélèvement d'unités de stockage (26) dans et hors d'emplacements de stockage (28) dans les plans de rayonnage (Ei), l'au moins une travée de rayonnage (14-1) étant définie par une pluralité de canaux de véhicule (30) disposés les uns au-dessus des autres, chaque canal de véhicule (30) s'étendant le long d'au moins l'un des plans de rayonnage (Ei) à travers l'au moins une travée de rayonnage (14-1), le procédé comprenant les étapes suivantes :
pour chaque canal de véhicule (30), définition (S1) d'un sens de déplacement fixe (32) pour les véhicules (22), de sorte que les véhicules (22) se déplacent exclusivement soit du premier élévateur (18-1) vers le deuxième élévateur (20-1), ou inversement, à travers un canal (30) correspondant de l'au moins une travée de rayonnage (14-1) ;
et lorsqu'il existe un trajet de liaison (38) pour les véhicules (22) en dehors de l'au moins une travée de rayonnage (14-1) entre le premier élévateur (18-1) et le deuxième élévateur (20-1), définition (S4) d'un sens de déplacement fixe (36) pour le trajet de liaison (38), de sorte que les véhicules (22) se déplacent exclusivement entre le premier élévateur (18-1) et le deuxième élévateur (20-1), ou inversement ;
les sens de transport et de déplacement (32, 34, 36) étant définis de telle sorte que les véhicules (22) se déplacent le long de trajectoires en boucle fermée (40) à travers l'au moins une travée de rayonnage (14-1), **caractérisé par** l'étape suivante :
définition (S2) d'un sens de transport fixe (34) pour chaque élévateur (16 ; 18-1, 20-1), de sorte que le premier ou le deuxième élévateur de véhicule (18-1, 20-1) transporte les véhicules (22) exclusivement vers le haut et l'autre élévateur de véhicule (20-1, 18-1) transporte les véhicules (22) exclusivement vers le bas ; et
le sens de déplacement fixe (32) d'au moins un canal (30-1 ; 30-2) étant défini de manière opposée aux sens de déplacement fixes (32) des canaux (30) restants dans l'au moins une travée de rayonnage (14-1).

2. Procédé selon la revendication 1, selon lequel les véhicules (22) emmagasinent dans les emplacements de stockage (28) et/ou prélèvent des emplacements de stockage (28) des unités de stockage (26) pendant qu'ils se déplacent à travers l'un des canaux (30), les véhicules (22) vides étant chargés d'unités de stockage (26) à emmagasiner à un point de remplissage (44) et les véhicules (22) chargés déposant les unités de stockage (26) à prélever à un point de transfert (42), le point de remplissage (44) étant accouplé à un convoyeur d'acheminement (72), de préférence à proximité du premier ou du deuxième élévateur (16), et le point de transfert (42) étant accouplé à un convoyeur d'enlèvement (74) ou à un poste de préparation de commande (76), de préférence à proximité de l'autre élévateur (16).

3. Procédé selon l'une des revendications 1 ou 2, selon lequel les élévateurs (16) sont déplacés de manière cadencée de telle sorte qu'à chaque cycle de cadencement, au moins un véhicule (22) peut monter sur chacun des élévateurs (16) ou peut sortir de chacun des élévateurs (16).

4. Système d'entreposage et de préparation de commande (100) comprenant un entrepôt à rayonnages, lequel possède une pluralité de rayonnages (12-1, 12-2) qui définissent entre eux dans le sens longitudinal (X) au moins une travée de rayonnage (14-1), chaque rayonnage (12) possédant une pluralité de plans de rayonnage (Ei) disposés les uns au-dessus des autres, un premier élévateur de véhicule (16 ; 18-1) étant disposé au début de l'au moins une travée de rayonnage (14-1) et un deuxième élévateur de véhicule (16 ; 20-1) à la fin de l'au moins une travée de rayonnage (14-1), lesquels soulèvent ou abaissent à une hauteur souhaitée de l'un des plans de rayonnage (Ei), à l'aide de leurs moyens de suspension de charge, respectivement au moins un véhicule (22) qui est conçu pour l'emmagasinage et le prélèvement d'unités de stockage (26) dans et hors d'emplacements de stockage (28) dans les plans de rayonnage (Ei), l'au moins une travée de rayonnage (14-1) étant définie par une pluralité de canaux de véhicule (30) disposés les uns au-dessus des autres, chaque canal de véhicule (30) s'étendant horizontalement le long d'au moins l'un des plans de rayonnage (Ei) à travers l'au moins une travée de rayonnage (14-1), une commande (64) étant en outre prévue, laquelle amène les véhicules (22) à se déplacer dans les canaux (30) de l'au moins une travée de rayonnage (14-1) exclusivement dans un sens de déplacement fixe (32), de sorte que chacun des véhicules (22) se déplace le long d'une trajectoire en boucle fermée (40), **caractérisé en ce que** la commande amène l'un des élévateurs (18-1) de l'au moins une travée de rayonnage (14-1) à transporter les véhicules (22) exclusivement vers le haut et amène l'autre élévateur (20-1) de l'au moins une travée de rayonnage (14-1) à transporter les véhicules (22) exclusivement vers le bas, le sens de déplacement fixe (32) d'au moins un canal (30-1 ; 30-2) étant défini de manière opposée aux sens de déplacement fixes (32) des canaux (30) restants dans l'au moins une travée de rayonnage (14-1).

5. Système selon la revendication 4, lequel présente en outre un trajet de liaison (38 ; 60) en dehors de l'au moins une travée de rayonnage (14-1), lequel relie le premier élévateur (18-1, 20-1) avec le deuxième élévateur pour les véhicules (22), la commande (64) amenant les véhicules (22) à ne parcourir le trajet de liaison (38 ; 60) que dans un sens de déplacement fixe (36).

6. Système selon la revendication 5, avec lequel la commande (64) amène les véhicules (22) à parcourir tous les canaux (30) dans le même sens de déplacement fixe (32).

7. Système selon l'une des revendications 4 à 6, avec lequel au moins l'un des canaux (30) est accouplé à un convertisseur (80) dans une direction transversale (Z).

8. Système selon l'une des revendications 4 à 7, avec lequel un point de remplissage (44) est disposé adjacent à l'élévateur (16 ; 18-1) qui transporte les véhicules (22) vers le haut ou le long du trajet de liaison (38).

9. Système selon l'une des revendications 4 à 8, avec lequel un point de transfert (42) est disposé adjacent à l'élévateur (20-1) qui transporte les véhicules (22) vers le bas.

10. Système selon l'une des revendications 8 à 9, lequel possède en outre un convoyeur d'acheminement (72) d'unités de stockage et un convoyeur d'enlèvement (74) d'unités de stockage, lesquels sont accouplés, en technique de manutention des matériels, au point de remplissage (44) et/ou au point de transfert (42).

11. Système selon l'une des revendications 4 à 10, lequel possède en outre un tampon à véhicules (94).

12. Système selon l'une des revendications 4 à 11, avec lequel il est prévu pour chaque plan de rayonnage (Ei) un canal (30) dans l'au moins une travée de rayonnage (14-1).

13. Système selon l'une des revendications 4 à 12, avec lequel les véhicules (22) sont configurés pour ne se déplacer qu'en ligne droite.

14. Système selon l'une des revendications 4 à 13, lequel possède en outre un poste de préparation de commande (76) qui est accouplé, en technique de manutention des matériels, au point de transfert (42).

15. Système selon l'une des revendications 4 à 14, avec lequel les élévateurs (16 ; 18) sont réalisés sous la forme de convoyeurs verticaux fixes en révolution continue.

16. Système selon l'une des revendications 4 à 15, lequel possède une travée de rayonnage supplémentaire (14-2) dans laquelle est prévu au moins un contrôleur de rayonnage (78) afin d'approvisionner en unités de stockage (26) des emplacements de stockage (28) qui sont contigus à !'au moins une travée de rayonnage (14-1).

17. Système selon la revendication 16, avec lequel des canaux de traversée (102) sont prévus dans le sens transversal (Z) dans les rayonnages (12), lesquels s'étendent de la travée de rayonnage supplémentaire (14-2) vers l'au moins une travée de rayonnage (14-1).
